# EUROPEAN PATENT APPLICATION

(11) **EP 3 916 135 A1**
(43) Date of publication of application: **01.12.2021**
(21) Application number: 20315263.2
(22) Date of filing: 26.05.2020
(51) Int. Cl.: C25D 11/10, C25D 11/18, C25D 11/24, B64C 3/00

(54) **METHOD FOR MODIFYING A METALLIC SURFACE, SUCH AS A LEADING EDGE PORTION OF AN AIRFOIL**

(71) Applicant: Airbus (S.A.S.), 31700 Blagnac (FR)
(72) Inventor: Belaud, Clémentine, 82024 Taufkirchen (DE); Vercillo, Vittorio, 82024 Taufkirchen (DE); Bonaccurso, Elmar, 82024 Taufkirchen (DE)
(74) Representative: KASTEL Patentanwälte PartG mbB

(57) **Abstract**

In order to improve water and ice repellent characteristics of a leading edge portion (28) of an airfoil (16), a method for modifying a metallic substrate (32) is proposed. The leading edge portion (28) is made of an aluminium alloy or aluminium. Initially, the leading edge portion (28) is cleaned with a cleaning agent. The leading edge portion (28) is anodized in a bath of oxalic acid. Furthermore, initial nanopores formed in anodization are widened using phosphoric acid to a desired target dimension. The metallic oxide layer (36) is coated with chemical hydrophobization agent to further increase the superhydrophobicity. As a result, the leading edge portion (28) is morphologically and chemically functionalized for repelling water and ice.

## Description

The invention relates to a method for modifying a metallic surface into a superhydrophobic surface. Furthermore, the invention relates to a method for modifying a leading edge portion of an airfoil and such a modified airfoil.

US 2017 / 0 002 475 A1 discloses a method for manufacturing a nanostructured metallic surface having water and ice repellent characteristics.

US 2015 / 0 299 889 A1 discloses a self-cleaning and superhydrophobic surface based on TiO₂ nanotubes.

It is the object of the invention to improve water and ice repellent characteristics of metal surfaces, such as airfoils.

The object is achieved through the features according to the independent claims. Preferred embodiments are subject-matter of the dependent claims.

The invention provides a method for manufacturing a superhydrophobic surface on a metallic substrate, the method comprising:
1.1 providing a metallic substrate that includes or consists of aluminium or an aluminium alloy;
1.2 anodizing the metallic substrate using an anodizing agent that includes oxalic acid so as to form a porous metallic oxide layer having a plurality of pores;
1.3 widening the pores using a pore-widening agent that includes phosphoric acid so as to form widened pores having a predetermined target dimension; and
1.4 applying a hydrophobizing agent to the porous metallic oxide layer with the widened pores.

Preferably, in step 1.2 the anodizing agent includes oxalic acid with a molarity from 0.2 moles per litre to 0.4 moles per litre. Preferably, in step 1.2 the anodizing agent includes oxalic acid with a molarity of 0.3 moles per litre.

Preferably, in step 1.2 the anode is formed by the metallic substrate and the cathode is formed by a steel member, preferably a stainless steel member.

Preferably, in step 1.3 the pore-widening agent includes phosphoric acid with a molarity from 0.8 moles per litre to 0.9 moles per litre. Preferably, in step 1.3 the pore-widening agent includes phosphoric acid with a molarity of 0.86 moles per litre.

Preferably, step 1.2 is performed for a duration of 10 minutes.

Preferably, step 1.3 is performed for a duration of 10 minutes.

Preferably, step 1.2 is performed at a temperature from 20 °C to 25 °C.

Preferably, step 1.3 is performed at a temperature of 40 °C.

Preferably, step 1.2 is performed using a controlled voltage source having a voltage set to 40 V.

Preferably, in step 1.2 the anode to cathode ratio is set from 2.0:10 to 2.4:10. Preferably, in step 1.2 the anode to cathode ratio is set to 2.2:10.

Preferably, step 1.1 includes cleaning the metallic substrate before step 1.2, preferably with isopropanol.

Preferably, the method further comprises rinsing the porous metallic oxide surface using de-ionized water between step 1.1 and step 1.2.

Preferably, the method further comprises rinsing the porous metallic oxide surface using de-ionized water between step 1.2 and step 1.3.

Preferably, rinsing is performed for 20 seconds to 1 minute, preferably for 20 seconds.

The invention provides a method for manufacturing a superhydrophobic surface on a leading edge portion of an airfoil so as to mitigate or prevent ice accretion on the leading edge portion, the method comprising the steps of:
- providing a leading edge portion comprising a leading edge body part and a clad member bonded to the leading edge body part; and
- performing the preferred method with the clad member as the metallic substrate.

The invention provides an airfoil, such as wing, winglet, or slat, configured for mitigating or preventing ice accretion, the airfoil comprising an airfoil body and a leading edge portion, wherein the leading edge portion has a leading edge body part and a clad member bonded to the leading edge body part, wherein the clad member is obtainable by the preferred method.

The invention provides an aircraft comprising a preferred airfoil.

Icing represents a major nuisance to all kinds of aviation products, be it commercial aircraft, helicopters or unmanned aerial vehicles (UAVs). Some components implement ice protection systems (IPS). It is an idea of the invention to expand ice protection to other components which currently lack such measures and are being developed further for all weather capabilities.

Most of commercial aircraft today usually adopt a bleed air IPS, which extracts hot air from the combustion chamber of the engine to warm up external surfaces of the wing, for example. This system is heavy, has lots of components and is overall less efficient. Above all, in the eye of industry 4.0, more electric commercial aircraft could make bleed air obsolete.

Icephobic surfaces are capable of reducing the adhesion strengths of ice to a surface. They represent a promising technology to support novel generation of thermal or mechanical IPS: The power requirement reduction of the IPS induced by an icephobic surface may improve or enable the use of electrothermal elements (heaters, e.g. carbon nanotubes mats) and electromechanical elements (e.g. pie-zos).

Aerodynamic parts, in particular airfoils, such as leading edge slats are made of aluminium alloy (AA) 2024 clad. The clad is a high-purity aluminium surface layer metallurgically bonded, for example rolled, onto the AA 2024 alloy for corrosion protection. One idea of the invention is to modify the clad layer. Thus, the ideas described herein may be applied to aluminium alloy clad substrates and to pure aluminium substrates.

While structured surfaces and superhydrophobic surfaces and anodization processes are generally known per se, the methods and ideas described herein are used to tune the surface properties of aluminium alloys in order to tackle icing.

The invention is based on the idea to make an icephobic porous aluminium oxide (Al₂O₃) layer on AA2024 clad substrate. This can enable the implementation of more efficient IPS. Moreover, the proposed methods may allow for a surface modification (i.e. chemically and morphologically) with no additional weight or aesthetic variation.

The method is also fast (<30 minutes), easy to perform, cheap, safe for the operator, environmentally friendly and REACH compliant. The porous aluminium oxide layer is a dense pack of regularly shaped nanotubes. Hydrophobization is done by spraying a hydrophobizing agent to give the right surface chemistry to the surface in order to repel supercooled water droplets. The idea is based on the assumption that superhydrophobicity also leads to icephobicity.

The use of hydrophobic (i.e. water repellent) and superhydrophobic surfaces can reduce the adhesion of the ice which may accrete as a consequence of the impact of supercooled water droplets on the external surfaces of aircraft during flight operation. The use cases in mind for this invention are icing of slats and winglets. However, as will be recognized the ideas described herein may be applied to any airfoil having an aluminium alloy or aluminium surface.

One way to produce superhydrophobic/icephobic surfaces is via anodizing. A nanostructured porous aluminium oxide layer is generated on the surfaces. Depending on the size of the pores, superhydrophobicity can be achieved. Thanks to roughness produced on the surface, the water droplet impinging on it will rest in a spherical shape in the so-called Cassie-Baxter state without wetting the surface.

Herein a method for building such a hydrophobic and icephobic aluminium oxide layer on AA2024 clad substrate with a smooth macrostructure and a highly-organized nano structure is disclosed, in order to repel supercool water droplets and to tackle icing without increasing the skin drag (surfaces with a smooth microstructure are required).

After initial cleaning of the substrate, anodization is performed with an anodization device. The voltage is applied and stable while the current flow will change in time. Indeed, the oxide layer modifies the surface properties and is insulating the substrate. The anode to cathode ratio is preferably 2.2:10.

Nanotubes are built on the substrate during anodization. Then they are widened with a pore-widening step to reach the targeted dimension (diameter<100 nm and thin walls).

Finally, chemical functionalization is performed with a commercially available hydrophobizing agent, such as Mecasurf ® obtainable by Surfactis Technologies, Angers, France. Similar products may be used.

In addition to manufacturing the desired nanostructure, the wetting properties were tested using 10 µl droplets of deionized water with the instrument "Drop Shape Analyzer DSA25" by Krüss GmbH. The contact angle measurement shows that the surface presented herein has a lower wettability than the reference bare AA2024 clad, and even repels water droplets impacting on its surface. The water contact angle for the reference was (78 ± 2)° while the substrate modified according to the invention exhibits a water contact angle of (146 ± 2)°.

Furthermore, the icephobic properties of the method according to the invention were tested in the iCORE (icing and COntamination REsearch) facility. The iCORE is a lab-sized icing wind tunnel in a Gottingen configuration (i.e. circular closed-loop wind tunnel) located at Airbus Central R&T. The iCORE can simulate atmospheric in-flight icing conditions with a median volume diameter (MVD) of the supercooled water droplets of approximately 20 µm. This volume corresponds to the typical drop size in clouds and in accordance to the icing design envelopes collected in appendix C specifications from the Federal Aviation Administration (FAA).

Four test conditions were used during the ice adhesion test: rime, mixed/rime, mixed/glaze and glaze. The liquid water content (LWC) is defined as the amount of water per volume unit of air. Basically, it represents how much water is in the icing cloud. During the test, a strain gage measures the strain of the test sample which can be related to the interfacial shear stresses between ice and surface.

The parameters for the ice adhesion test were:

| **Ice type** | **Temperature [°C]** | **Air speed [m/s]** | **LWC [g/m³]** | **MVD [µm]** |
|---|---|---|---|---|
| Rime | -20 | 50 | 0.3 | 20 |
| Mixed rime | -20 | 50 | 0.8 | 20 |
| Mixed glaze | -5 | 50 | 0.3 | 20 |
| Glaze | -5 | 80 | 1.0 | 20 |

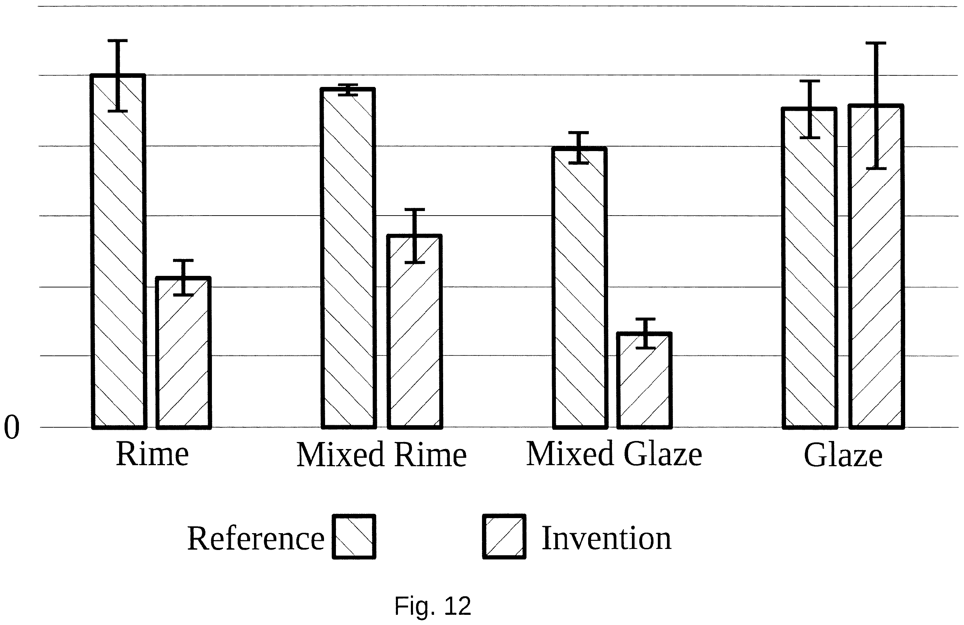

The comparison between the reference bare AA2024 clad surface and the novel anodized AA2024 clad surface is depicted in Fig. 12.

It is possible to observe that for the rime, mixed/rime and mixed/glaze icing conditions, the surface according to the invention significantly reduces the ice adhesion with respect to the bare reference AA2024 clad.

In the glaze ice condition, no benefit was observed. It is hypothesized that in this particular condition, the impinging supercooled water droplets may not freeze on impact but run wet after the impact. In this case, the water may be still partially able to penetrate the nanostructures and then freeze inside them which may result in an increased mechanical interlocking. It should be noted that this is a working hypothesis to which the applicant shall not be bound.

Embodiments of the invention are subsequently described in more detail with reference to the accompanying schematic drawings. Therein:
- Fig. 1: depicts an embodiment of an aircraft;
- Fig. 2: depicts an embodiment of an airfoil;
- Fig. 3: depicts a cross-section of the airfoil of Fig. 2;
- Fig. 4: depicts a schematic view of the airfoil of Fig. 2 in the nanoscopic domain;
- Fig. 5: depicts an embodiment of an anodizing device;
- Fig. 6: depicts an embodiment of a method according to the invention;
- Fig. 7: depicts a top view SEM picture of a nanostructured substrate at 1000x magnification;
- Fig. 8: depicts a top view SEM picture of the nanostructured substrate of Fig. 7 at 10,000x magnification (insert 50,000x magnification);
- Fig. 9: depicts an SEM micrograph depicting a cross section of the nanostructured substrate of Fig. 7 at 50,000x magnification;
- Fig. 10: depicts an image sequence depicting a falling water droplet onto an unstructured substrate;
- Fig. 11: depicts an image sequence depicting a falling water droplet onto the nanostructured substrate of Fig. 7; and
- Fig. 12: depicts a diagram of experimental results under different icing conditions.

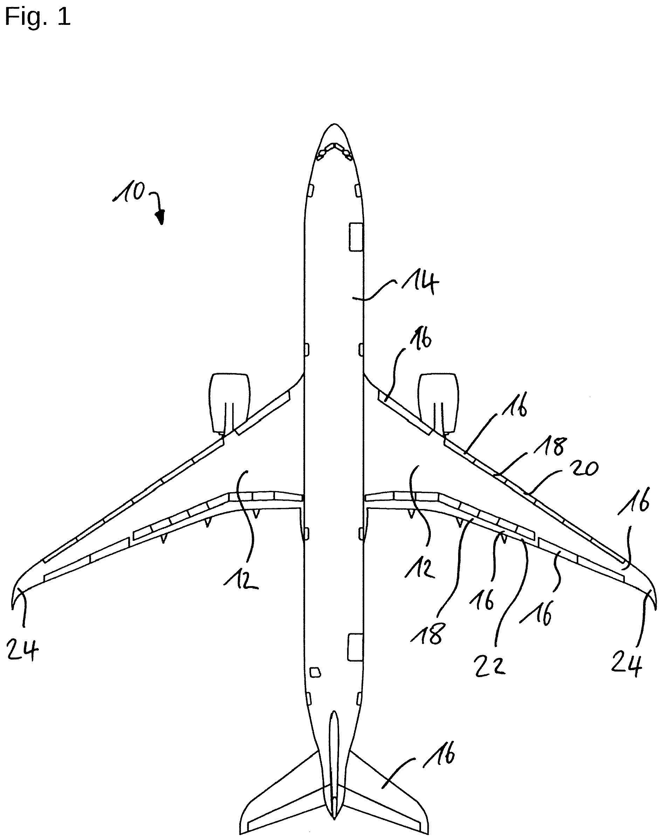

Fig. 1 depicts an embodiment of an aircraft 10. In a manner know per se, the aircraft 10 comprises a pair of wings 12 attached to a fuselage 14.

The wing 12 is an example for an airfoil 16. Additional examples for the airfoil 16 are high-lift devices 18, slats 20 and flaps 22.

Furthermore, the wing 12 may comprise a winglet 24 at its tip. The winglet 24 as part of the wing 12 is also an example for an airfoil 16.

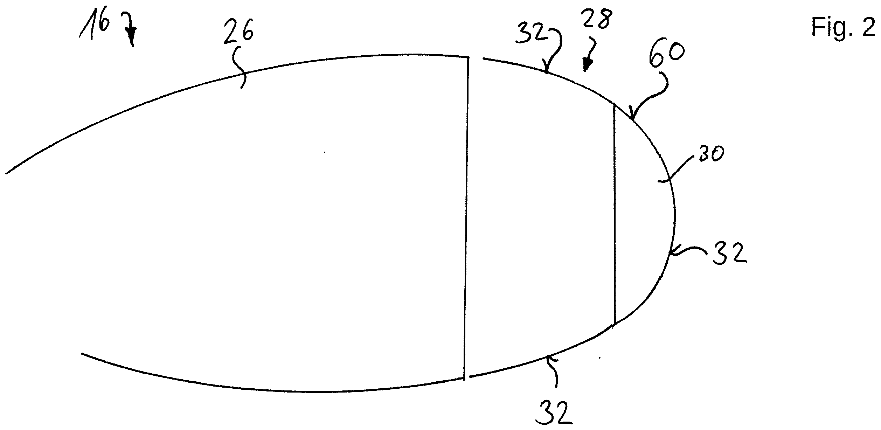

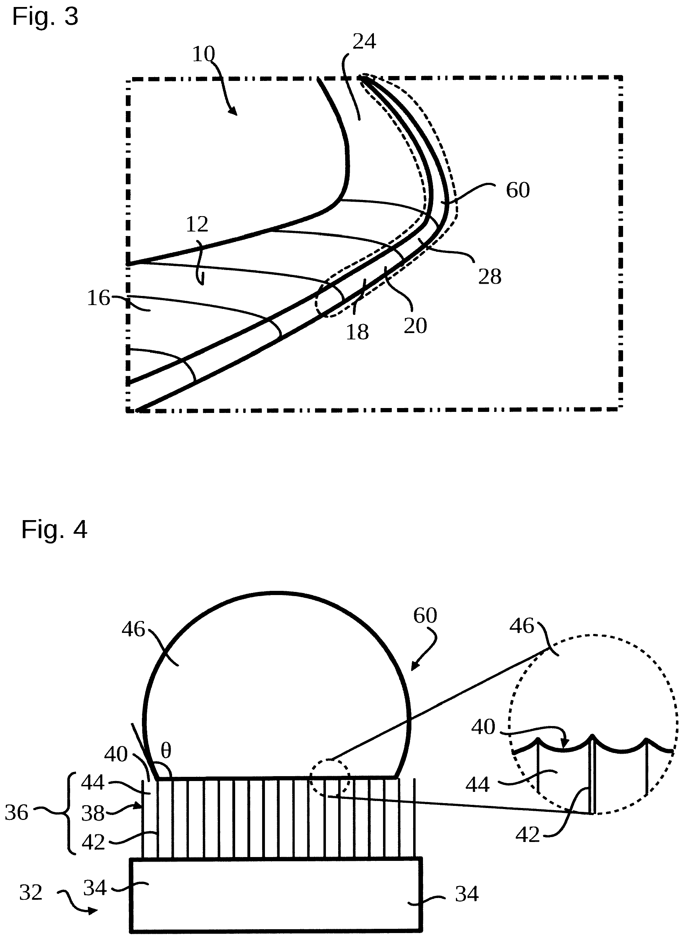

Fig. 2 and Fig. 3 depict the airfoil 16 in more detail. The airfoil 16 comprises an airfoil body 26. In the case of the wing 12, a wing box is an example for the airfoil body 26. Furthermore, the airfoil 16 comprises a leading edge portion 28. The leading edge portion 28 is preferably attached to the airfoil body 26 and faces in flight direction.

The leading edge portion 28 may include a leading edge body part 30. The leading edge body part 30 supports a clad member 32 that is bonded to the leading edge body part 30. The clad member 32 is preferably made from aluminium or aluminium alloy, such as aluminium alloy 2024 (AA2024).

The clad member 32 includes a metallic substrate portion 34 and a porous metallic oxide layer portion 36. The metallic oxide layer portion 36 is made of aluminium oxide (Al₂O₃) and includes a plurality of nanotubes 38. The nanotubes 38 are preferably arranged perpendicular relative to the metallic substrate portion 34.

Each nanotube 38 defines a nanopore 40. The nanopore 40 preferably has a size of smaller than 100 nm. Furthermore, each nanotube 38 comprises a nano-sidewall 42. The thickness of the nano-sidewall 42 is substantially smaller than the size of the nanopore 40, for example roughly 1 nm to 5 nm.

The nanotube 38 further defines a nanocavity 44. On one end, the nanocavity 44 is limited by the metallic substrate portion 34, whereas on the other end the nanocavity 44 is open and the nanopore 40 forms the entrance to the nanocavity 44. The nano-sidewall 42 defines the nanocavity 44 in the remaining directions.

As depicted in Fig. 4, when a water droplet 46 is in contact with the clad member 32, the water droplet 46 forms a contact angle above 140 degrees. The water droplet 46 also closes off the nanocavities 44 so that at the interface the water droplet 46 bulges into the air filled nanocavity 44 without wetting the nano-sidewall 42. As a result, the (macro-)surface of the clad member 32 has superhydrophobic properties so that the water and ice repellent characteristics of the clad member 32 are improved.

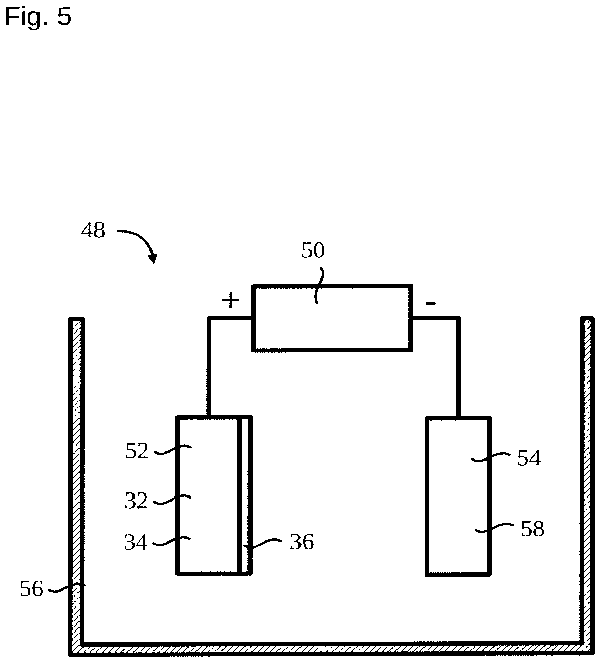

Fig. 5 depicts an anodizing device 48 that is used during preparation of the clad member 32. The anodizing device 48 includes a controlled voltage source 50, an anode member 52 and a cathode member 54. The anode member 52 and the cathode member 54 are electrically connected to the controlled voltage source 50.

Furthermore, the anode member 52 and the cathode member 54 are submerged in an electrolyte bath 56.

Subsequently, the anode member 52 is formed by the clad member 32 and the cathode member 54 is formed by a stainless steel member 58. The electrolyte bath 56 can also be designated as an anodizing agent.

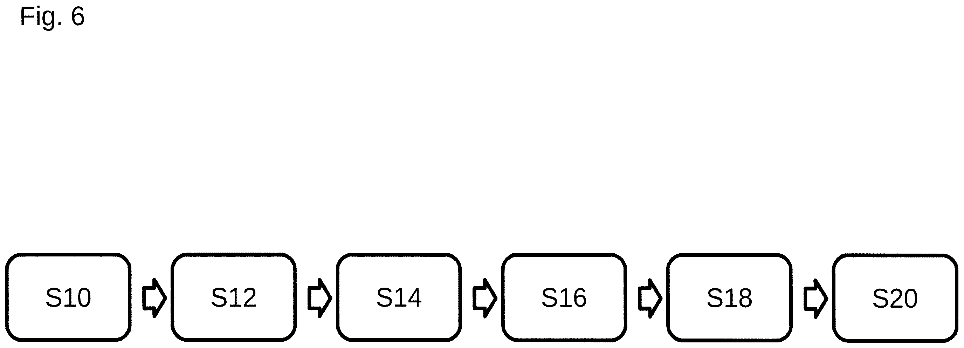

Referring to Fig. 6, a method for obtaining a superhydrophobic surface is described in more detail.

Initially, a preparation step S10 is performed. The preparation step S10 includes providing the clad member 32 as a metallic substrate. Furthermore, preparation step S10 includes cleaning the metallic substrate 32 with a cleaning agent, such as isopropanol.

Subsequently, an anodization step S12 is performed. In the anodization step S12, the metallic substrate 32 is brought into contact with the anodizing agent. The anodizing agent is preferably oxalic acid with a molarity of 0.3 moles per litre. The anodization is executed using the controlled voltage source 50 with a voltage of 40 V. The temperature of the anodizing agent is kept between 20 °C and 25 °C. The whole anodization step S12 is preferably performed for a duration of 10 min. The current flow decreases over time due to formation of Al₂O₃ on the surface of the metallic substrate 32. In addition, initial nanopores are formed so that the metallic substrate now has a porous metallic oxide layer. However, those initially formed nanopores do not yet have the desired target dimension.

Subsequently, a first rinsing step S14 is performed. During the first rinsing step S14, the metallic substrate 32 is rinsed with deionised water for 20 s.

Subsequently, a pore-widening step S16 is performed. In the pore-widening step S16, the metallic substrate 32 is brought into contact with a pore-widening agent that includes phosphoric acid. Preferably, the phosphoric acid has a molarity 0.86 moles per litre. The pore-widening step S16 is executed at a temperature of 40 °C and preferably performed for a duration of 10 min. After the pore-widening step S16, the initial nanopores have been widened to the desired nanopores 40 having the target dimension, such as close to but smaller than 100 nm.

Now, a second rinsing step S18 is performed. The second rinsing step S18 is performed using deionised water and rinsing the metallic substrate 32 for 20 s.

After the second rinsing step S18, a hydrophobization step S20 is performed. In the hydrophobization step S20, a hydrophobizing agent is applied to the nano structured metallic oxide layer so that in addition to mechanical changes, a chemical functionalization is performed.

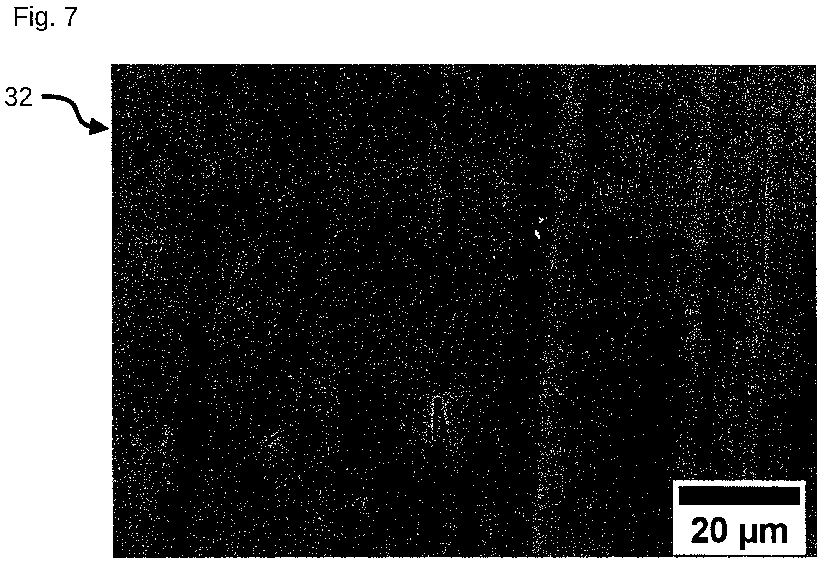

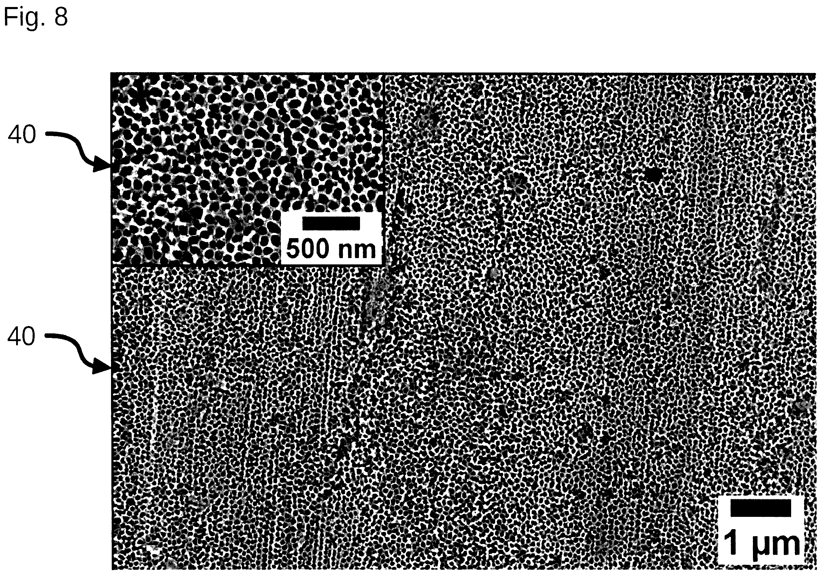

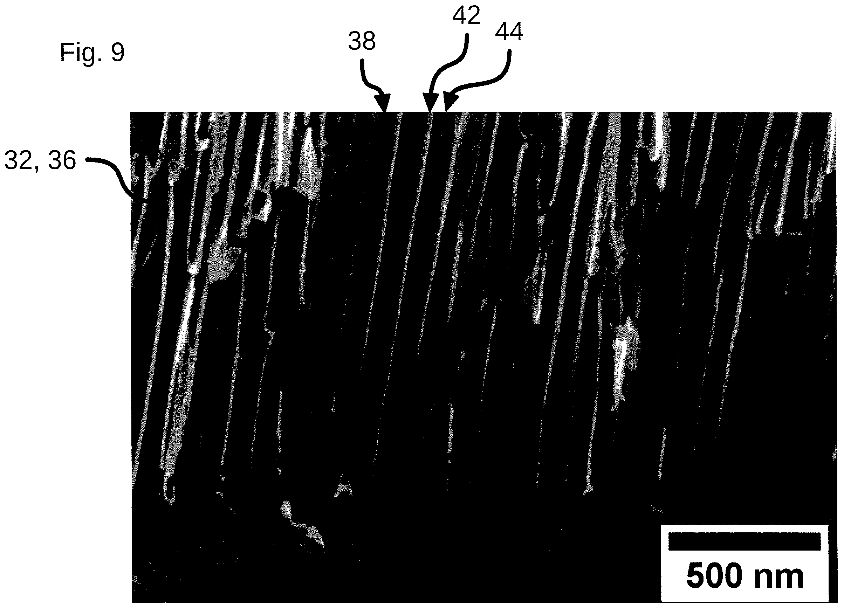

As a result, the clad member 32 now has a superhydrophobic/icephobic surface which improves ice repellent characteristics. As depicted in Fig. 7 to Fig. 9, the nanostructures, in particular the nanotubes 38 after performing the steps S10 to S20 are clearly visible.

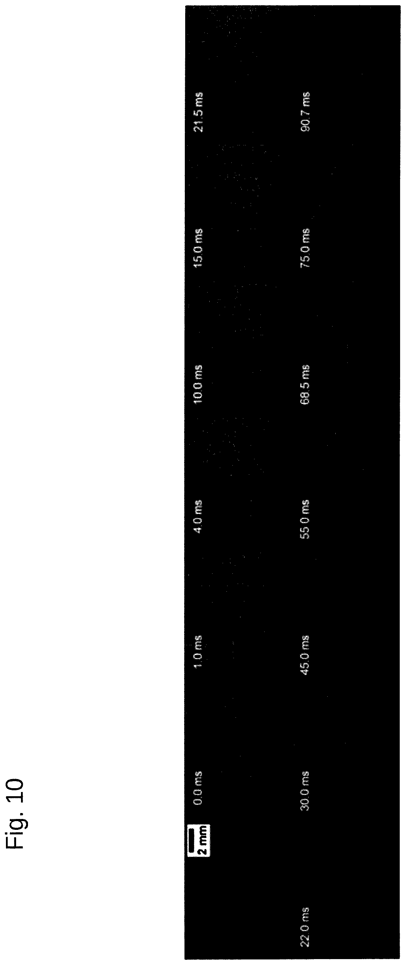

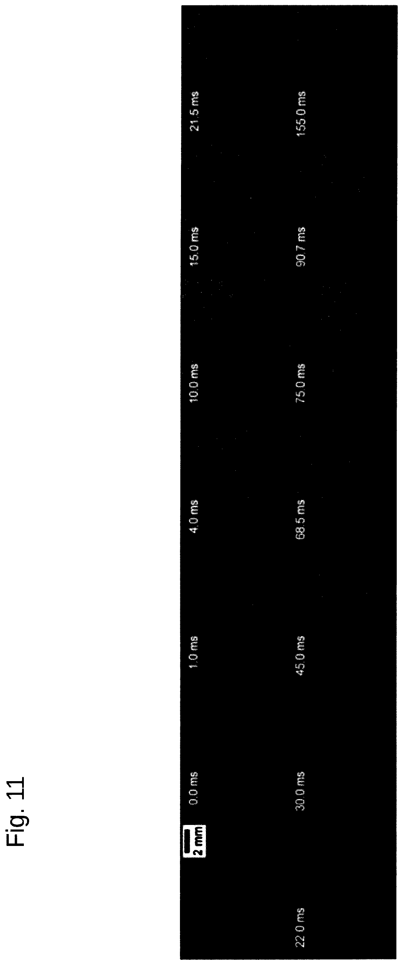

Fig. 10 depicts an imagine sequence of a falling water droplet onto an unstructured substrate, whereas in Fig. 11, an imagine sequence depicting a falling water droplet onto the nanostructured substrate is depicted. Comparing Fig. 10 and Fig. 11, the water repelling effect is clearly visible, in particular when looking at the contact angles. As shown in Fig. 11, the water droplet even rebounds once from the surface before resting on it in the Cassie-Baxter state.

Finally, as depicted in Fig. 12, experimental results in an ice wind tunnel show the differences between unstructured substrates and substrates that have been subjected to the method according to steps S10 to S20. As can be seen, for ice conditions considering rime, mixed/rime and mixed/glaze, the interfacial shear stress needed for removing the ice is significantly lowered and generally half when compared to the unstructured substrate. Only relating to pure glaze, no difference can be observed.

In order to improve water and ice repellent characteristics of a leading edge portion (28) of an airfoil (16), a method for modifying a metallic substrate (32) is proposed. The leading edge portion (28) is made of an aluminium alloy or aluminium. Initially, the leading edge portion (28) is cleaned with a cleaning agent. The leading edge portion (28) is anodized in a bath of oxalic acid. Furthermore, initial nanopores formed in anodization are widened using phosphoric acid to a desired target dimension. The metallic oxide layer (36) is coated with chemical hydrophobization agent to further increase the superhydrophobicity. As a result, the leading edge portion (28) is morphologically and chemically functionalized for repelling water and ice.

### List of reference signs:

- 10: aircraft
- 12: wing
- 14: fuselage
- 16: airfoil
- 18: high-lift device
- 20: slats
- 22: flaps
- 24: winglet
- 26: airfoil body
- 28: leading edge portion
- 30: leading edge body part
- 32: clad member (metallic substrate)
- 34: metallic substrate portion
- 36: metallic oxide layer portion
- 38: nanotubes
- 40: nanopore
- 42: nano side wall
- 44: nanocavity
- 46: water droplet
- 48: anodizing device
- 50: controlled voltage source
- 52: anode member
- 54: cathode member
- 56: electrolyte bath (anodizing agent)
- 58: stainless steel member
- 60: superhydrophobic surface
- S10: preparation step
- S12: anodization step
- S14: first rinsing step
- S16: pre widening step
- S18: second rising step
- S20: hydrophobization step

## Claims

1. A method for manufacturing a superhydrophobic surface (60) on a metallic substrate (32), the method comprising:
1.1 providing a metallic substrate (32) that includes or consists of aluminium or an aluminium alloy;
1.2 anodizing the metallic substrate (32) using an anodizing agent that includes oxalic acid so as to form a porous metallic oxide layer having a plurality of pores;
1.3 widening the pores using a pore-widening agent that includes phosphoric acid so as to form widened pores having a predetermined target dimension; and
1.4 applying a hydrophobizing agent to the porous metallic oxide layer with the widened pores.

2. The method according to any of the preceding claims, wherein in step 1.2 the anodizing agent includes oxalic acid with a molarity from 0.2 moles per litre to 0.4 moles per litre, preferably with a molarity of 0.3 moles per litre.

3. The method according to any of the preceding claims, wherein in step 1.3 the pore-widening agent includes phosphoric acid with a molarity from 0.8 moles per litre to 0.9 moles per litre, preferably with a molarity of 0.86 moles per litre.

4. The method according to any of the preceding claims, wherein step 1.2 and/or step 1.3 are performed for a duration of 10 minutes.

5. The method according to any of the preceding claims, wherein step 1.3 is performed at a higher temperature as step 1.2.

6. The method according to any of the preceding claims, wherein step 1.2 is performed at a temperature from 20 °C to 25 °C.

7. The method according to any of the preceding claims, wherein step 1.3 is performed at a temperature of 40 °C.

8. The method according to any of the preceding claims, wherein step 1.2 is performed using a controlled voltage source (50), preferably set to 40 V.

9. The method according to any of the preceding claims, wherein in step 1.2 the anode to cathode ratio is set from 2.0:10 to 2.4:10, preferably set to 2.2:10.

10. The method according to any of the preceding claims, wherein step 1.1 includes:
- cleaning the metallic substrate (32) before step 1.2, preferably with isopropanol.

11. The method according to any of the preceding claims, further comprising any of the steps of:
- rinsing the porous metallic oxide surface (32) using de-ionized water between step 1.1 and step 1.2, and/or
- rinsing the porous metallic oxide surface (32) using de-ionized water between step 1.2 and step 1.3.

12. Method according to claim 11, wherein rinsing is performed for 20 seconds to 1 minute, preferably for 20 seconds.

13. A method for manufacturing a superhydrophobic surface on a leading edge portion (28) of an airfoil (16) so as to mitigate or prevent ice accretion on the leading edge portion (28), the method comprising the steps of:
13.1 providing a leading edge portion (28) comprising a leading edge body part (30) and a clad member (32) bonded to the leading edge body part (30); and
13.2 performing the method according to any of the preceding claims with the clad member (32) as the metallic substrate (32).

14. An airfoil (16), such as a wing (12), a winglet, a high-lift device (18), or a slat (20), the airfoil (16) being configured for mitigating or preventing ice accretion, the airfoil (16) comprising an airfoil body (26) and a leading edge portion (28), wherein the leading edge portion (28) has a leading edge body part (30) and a clad member (32) bonded to the leading edge body part (30), wherein the clad member (32) is obtainable by the method according to claim 13.

15. An aircraft (10) comprising an airfoil (16) according to claim 14.
